# EUROPEAN PATENT APPLICATION

(11) **EP 4 571 412 A1**
(43) Date of publication of application: **18.06.2025**
(21) Application number: 23215798.2
(22) Date of filing: 12.12.2023
(51) Int. Cl.: G02F 1/225, G02F 1/03, G02F 1/21

(54) **OPTICAL WAVEGUIDE MODULATOR**

(71) Applicant: Nokia Solutions and Networks Oy, 02610 Espoo (FI)
(72) Inventor: AIMONE, Alessandro, Berlin (DE)
(74) Representative: Nokia EPO representatives

(57) **Abstract**

A planar electro-optic Mach-Zehnder modulator disposed along a surface of a substrate includes an RF transmission line, and two optical waveguide arms extending along and between two drive electrodes of the RF transmission line. First modulation electrodes are electrically connected to a first of the drive electrodes so that an adjacent pair of segments of the optical waveguides is located between a pair of end segments of a corresponding one of the first modulation electrodes. Second modulation electrodes are electrically connected to the second of the drive electrodes such that an end segment of each of the second modulation electrodes is located between a corresponding one of the adjacent pairs of segments of the optical waveguides.

## Description

### TECHNICAL FIELD

The present invention relates to integrated electro-optical modulators.

### BACKGROUND

Data center interconnects and broad-band telecom networks make use of optical communication modules to process the high data rates of internet traffic. Optical transceiver capable of high data rates typically use Mach-Zehnder modulators (MZMs) having RF-driven electro-optical phase modulators in each waveguide arm. Using optical materials having a large Pockels effect, such as e.g. lithium niobate (LiNbO3, "LN"), in the waveguide arms of an MZM enables providing data rates in excess of 100 Giga-bit/second (Gbs) while controlling for power consumption. A thin-film lithium niobate (TFLN) MZM combining superior electro-optic properties of lithium niobate with silicon photonics (SiP) may be implemented in an optoelectronic chip as a photonic integrated circuit (PIC). Advantageously, SiP can utilize mature CMOS processes to fabricate highly integrated optical circuits on a silicon substrate, allowing SiP chips to be mass produced at relatively low cost. Still, the physical size of thin-film LiNbO3 modulators, which may be up to several centimeters long, can limit how compact an optical transceiver can be.

### SUMMARY

Embodiments described herein relate to optical waveguide modulators utilizing an electro-optic material in waveguide arms thereof.

According to an example embodiment, provided is an apparatus. The apparatus includes a planar electro-optic (EO) Mach-Zehnder modulator (MZM) disposed along a surface of a substrate. The MZM comprises an RF transmission line comprising two drive electrodes located along the surface, and two optical waveguides connected to receive light in parallel from an optical splitter, the two optical waveguides being located between the two drive electrodes along thereof. The MZM further comprises first modulation electrodes electrically connecting to a first of the drive electrodes such that an adjacent pair of segments of the optical waveguides is located between a pair of end segments of a corresponding one or two of the first modulation electrodes. The MZM further comprises second modulation electrodes electrically connecting to the second of the drive electrodes such that an end segment of each of the second modulation electrodes is located between a corresponding one of the adjacent pairs of segments of the optical waveguides.

### BRIEF DESCRIPTION OF THE DRAWINGS

Embodiments disclosed herein will be described in greater detail with reference to the accompanying drawings which represent preferred embodiments thereof, in which like elements are indicated with like reference numerals, and wherein:
FIG. 1 is a schematic plan view of an example optical waveguide Mach-Zehnder modulator (MZM) having a two-electrode RF transmission line driving a plurality of modulation electrodes;
FIG. 2 is a schematic plan view of one modulator section of the MZM of FIG. 1;
FIG. 3 is a schematic plan view of a section of the MZM of FIG. 1 with a modulation electrode layout modified according to a first example;
FIG. 4A is a schematic diagram illustrating a cross-section of the MZM of FIG. 1 taken along the "A-A" line shown in FIG. 2, for an example implementation with the drive electrodes and the end segments of the modulation electrodes in a same layer;
FIG. 4B is a schematic diagram illustrating a cross-section of the example MZM of FIG. 4A taken along the "B-B" line shown in FIG. 2;
FIG. 4C is a schematic diagram illustrating a cross-section of the MZM of FIG. 4A taken along the "C-C" line shown in FIG. 2;
FIG. 5 is a schematic diagram illustrating a cross-section of the modulator of FIG. 1 taken along the "A-A" line shown in FIG. 2, for an example implementation with the drive electrodes and the end segments of the modulation electrodes in different layers;
FIG. 6 is a schematic diagram illustrating a cross-section of the modulator of FIG. 1 taken along the "A-A" line shown in FIG. 2, for an example implementation with an insulating layer between the optical core layer and the end segments of the modulation electrodes;
FIG. 7A is a schematic diagram illustrating a single-ended driving scheme of the MZM of FIG. 1;
FIG. 7B is a schematic diagram illustrating a differential driving scheme of the MZM of FIG. 1;
FIG. 8 is a schematic plan view of a section of the MZM of FIG. 1 with a modulation electrode layout modified according to a second example;
FIG. 9 is a schematic plan view of a section of the MZM of FIG. 1 with a modulation electrode layout modified according to a third example.

### DETAILED DESCRIPTION OF SOME SPECIFIC EMBODIMENTS

In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced in other embodiments that depart from these specific details. In other instances, detailed descriptions of well-known methods, devices, and circuits may be omitted so as not to obscure the description of the present invention. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Furthermore, the following abbreviations and acronyms may be used in the present document:
"EO" electro-optic
"Si" Silicon
"MZM" Mach-Zehnder Modulator
"LN" Lithium Niobate
"TFLN" Thin-Film Lithium Niobate
"PIC" Photonic Integrated Circuit
"RI" Refractive Index
"SOI" Silicon on Insulator
"RF" Radio Frequency
"DC" Direct Current
"TW" Travelling Wave

Note that as used herein, the terms "first", "second", and so forth are not intended to imply sequential ordering, but rather are intended to distinguish one element from another, unless explicitly stated. Similarly, sequential ordering of method steps does not imply a requirement of sequential order of their execution, unless explicitly stated. The term "vertical" refers to a direction generally perpendicular to a surface of the substrate along which relevant integrated circuitry is disposed. The term "horizontal" refers to a direction along the surface of the substrate.

Examples of optical waveguide MZMs described below may be advantageous, e.g. when modulating light using the Pockels effect, i.e. when the refractive index (RI) of the optical core of the MZM waveguide arms changes linearly with the applied electric field (E-field), and thus the sign of the E-filed induced RI change depends on the E-field direction. Example electrode arrangements described below facilitate mirror-symmetrical E-filed in the MZM arms, and thus enable push-pull modulation of light propagating therein, using a two-electrode RF transmission line with both single-ended and differential driving.

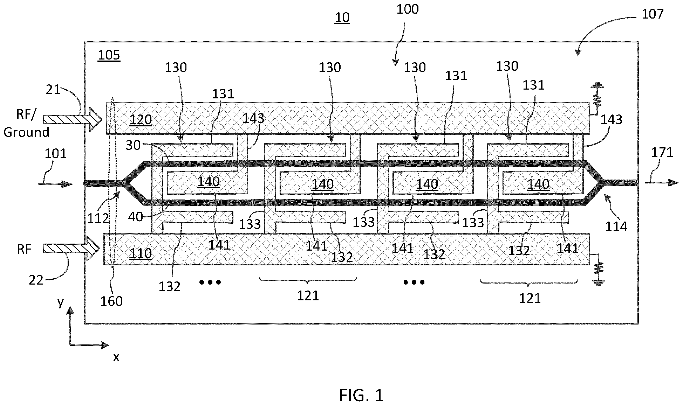

FIG. 1 schematically illustrates, in a plan view, an example electro-optic (EO) Mach-Zehnder modulator 100 ("MZM 100"). The MZM 100 is disposed in a chip 10 along a surface 107 of a substrate 105. The substrate 105 may be a single-layer or a multi-layer structure, whose surface 107 is roughly or substantially planar. The substrate 105 may be, for example, a silicon substrate, a silicon-on-insulator (SOI) substrate, or any other suitable substrate, e.g. a substrate suitable to support thin-film EO material, such as but not limited to thin-film lithium niobate (TFLN). The MZM 100 includes two drive electrodes, 110 and 120, which extend along the surface 107, and a pair of optical waveguides, 30 and 40, extending along and between the drive electrodes 110 and 120 along the surface 107. The optical waveguides 30 and 40 form two arms of the MZM 100 and are connected to receive light 101 in parallel from an optical splitter 112. Output ends of the optical waveguides 30 and 40 are connected to corresponding inputs of an optical combiner 114. The MZM 100 further includes a plurality of first modulation electrodes 130 that are electrically connected to the first drive electrode 110, and a plurality of second modulation electrodes 140 that are electrically connected to the second drive electrode 120. In the illustrated example, pairs of first (130) and second (140) modulation electrodes form a series of modulator sections 121 configured to modulate light propagating in the optical waveguides 120 and 130 when driven by a voltage signal applied to the drive electrode(s) 110 and/or 120.

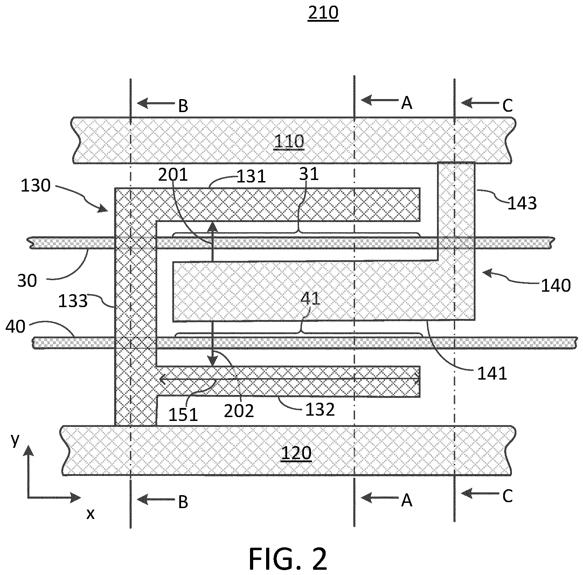

FIG. 2 illustrates a zoomed-in view of one of the modulator sections 121 of the MZM 100, referred to herein as the modulator section 210. In the illustrated embodiment, the first modulation electrode 130 of the modulator section 210 has a pair of end segments, or branches, 131 and 132, extending along an adjacent pair of segments 31, 41 of the optical waveguides 30 and 40, respectively, said adjacent pair of optical waveguide segments 31 and 41 being located between the end segments 131, 132 of the first modulation electrode 130. The second modulation electrode 140 of the modulator section 210 has an end segment 141 that is located between the corresponding adjacent pair of segments, 31 and 41, of the optical waveguides 30 and 40, extending therealong. The end segments 131, 132 of the first modulation electrode 130 project from a transverse connection segment 133 that in turn projects from the first drive electrode 110. The end segment 141 of the second modulation electrode 140 projects from a transverse connection segment 143 thereof that in turn projects from the second drive electrode 120.

Applying different voltage signals to the drive electrodes 120 and 130 induces oppositely-directed electric fields in the optical waveguide segments 31 and 41, as schematically illustrated by arrows 201 and 202. The optical waveguides 30 and 40, or at least the segments 31 and 41 thereof, have optical waveguide cores that comprise, typically, suitable EO material exhibiting Pockels effect, such as lithium niobate (LiNbO₃, "LN"), e.g. TF LN. Other suitable EO materials may also be used, such as but not limited to barium titanate (BaTiO3), or one of EO polymer materials. An electric field ("E-field") induces a change in the refractive index (RI) of the EO material of the optical cores of the waveguide segments 31 and 41, with the sign of the RI change depending on the direction of the E-field in the EO material. The mirror symmetry of the induced electrical fields drive the modulation of the RI of said optical waveguide segments 31 and 41 in a push-pull manner, thereby causing push-pull modulation of optical phases of light portions propagating in the optical waveguides 30 and 40 through the modulator section 121. After passing through the series of the modulator sections of the MZM 100, e.g. such as the modulator sections 121 or 210, said light portions are recombined at the optical combiner 114 to obtain intensity and/or phase modulated output light 171.

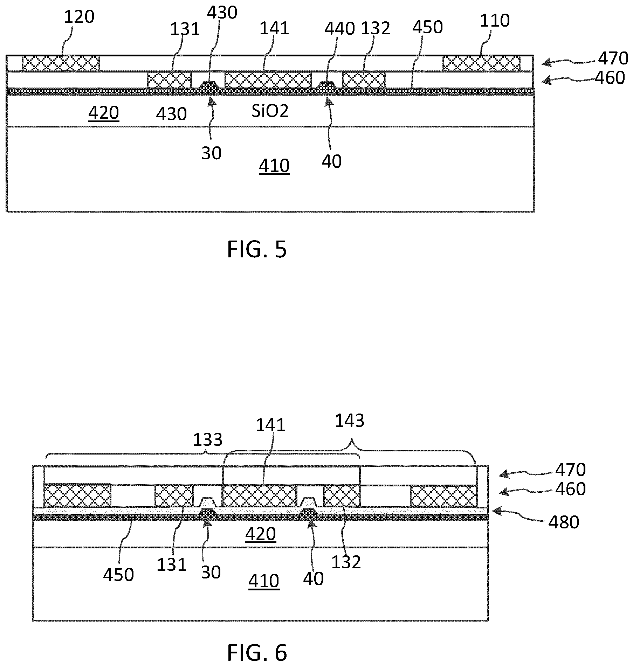

The drive electrodes 110 and 120 may form an RF electrical transmission line 160 (FIG. 1). The RF transmission line 160 supports propagation there along of an RF drive signal or signals provided at one end thereof, e.g. as illustrated by arrows 21 and/or 22. The drive electrode(s) 110 and/or 120 may have a first end adopted to receive the RF drive signal(s) from an RF driver circuit (e.g. 610, FIG. 6A; 620, FIG. 6B). The distal end(s) of the drive electrode(s) 110 and/or 120 may be electrically terminated in order to, at least, partially suppress back reflections of the RF signal therefrom, or even to totally suppress such back reflections. For example, such an electrical termination may be a matched electrical connection to a chip ground, as schematically illustrated in FIG. 1 by way of example, or to a DC source. In the illustrated example, the drive electrodes 110 and 120 are travelling-wave (TW) electrodes that are suitably terminated at the distal ends thereof.

In the configuration illustrated in FIGs. 1 and 2, the drive electrodes 110 and 120 are disposed somewhat away from the optical waveguides 30 and 40, and may be at least partially shielded therefrom by the end-segments 131, 132, 141 of the first and second modulation electrodes 130, 140. The primary function of the drive electrodes 110 and 120 is to deliver the RF modulation signal to the modulation electrodes 130, 140 of different ones of the modulator sections 121 in a timely fashion.

The end segments 131, 132, 141 of the modulation electrodes 130, 140 may operate substantially as lumped electrodes in the operating RF range of the modulator 100, e.g. 10 to 200 GHz typically. The end segments 131, 132, 141 may be, e.g., shorter than the smallest operating RF wavelength λ_{RFmin} of the MZM 100. In some embodiments, an electric length of one or more of the end segments 131, 132, 141 may be about equal to λ_{RF}/4, or an integer multiple thereof, where λ_{RF} is the wavelength of an RF signal of a frequency *f*_{RF} within the operating frequency range of the MZM 100. By way of example, the number of modulator sections 121 or 210 in the MZM 100 may be from 2 to about 150, e.g. between 4 and 50 in some example implementations. Further by way of example, the end segments 131, 132, 141 may have a length 41 in a range, e.g., from about 50 micrometers (µm) to about 400 µm, e.g., from about 100 µm to about 200 µm in some example implementations. In some implementations, the end segments 131, 132, 141 of the modulation electrodes 130 and 140 may all have approximately the same length. In other implementation, the length of the end segments 131, 132, 141 in different ones of the modulator sections 121 of the MZM may differ.

The RF transmission line 160 may be configured to match the propagation velocity of the RF signal(s) 21 and/or 22 therealong to that of the propagation speed of light 101 in the optical waveguides 30 and 40, so that the modulation of light by different ones of the modulator segments of the MZM 100, e.g. 121 or 210, add approximately in-phase. The modulation electrodes 130, 140 provide capacitive loading of the RF transmission line 160, reducing the propagation velocity of the RF modulation signal(s) 21 and/or, 22 therealong. In some embodiments, the drive electrodes 110, 120 may be additionally capacitively loaded to suitably adjust the propagation velocity of the RF signals therealong.

FIGs. 1 and 2 illustrate an example implementation wherein the pair of end segments 131 and 132, which extend along outer edges of the adjacent pair of optical waveguide segments 31 and 41, project from a same transverse connection segment 133, with the transverse connection segment 133 being electrically connected directly to the first drive electrode 110.

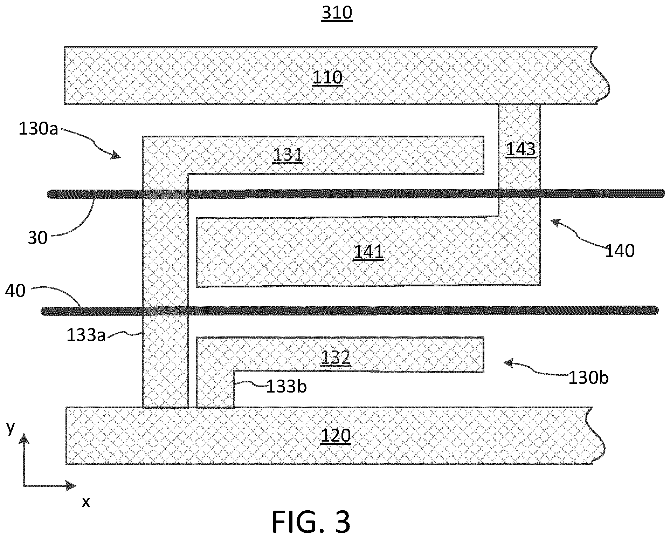

FIG. 3 illustrates a modulator section 310, which is a modification of the modulator section 210 in which the end segments 131 and 132 are separately connected to the first drive electrode 110 next to each other with a pair of corresponding transverse connection segments 133a and 133b. In this example, the adjacent pair of segments 31, 41 of the optical waveguides 30, 40 is located between a pair of end segments 131, 132 of two of the first modulation electrodes, 130a and 130b.

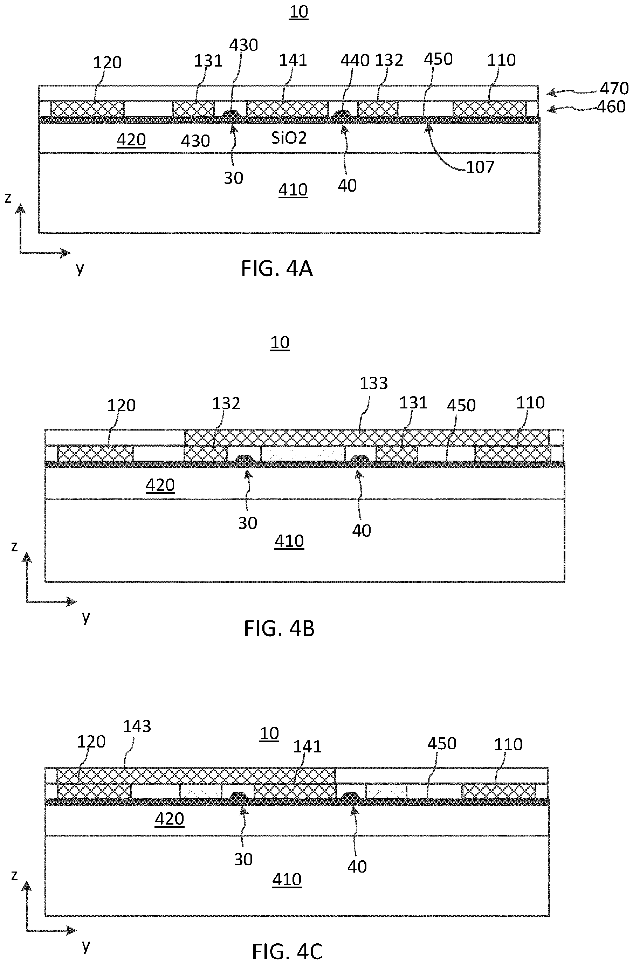

Depending on a particular implementation, the drive electrodes 110 and 120, the connections segments 133 and 144 of the modulation electrodes 130, 140, and the end segments 131, 132, 141 thereof may be disposed in a same layer of the chip 10 with the optical waveguides 30 and 40, or in a layer or layers vertically offset therefrom. FIGs. 4A - 6 illustrates some nonlimiting examples of possible layer structures of the chip 10 that may be used to implement the MZM 100, with various other configurations being possible.

FIG. 4A, 4B, and 4C schematically illustrate partial vertical cross-sections of the chip 10 along the lines AA, BB, and CC, respectively, indicated in FIG. 2, according to a first example. In this configuration, the chip 10 includes a layer 420 of insulating material, such as but not limited to, e.g., silicon dioxide (SiO2), located over a base substrate 410, typically but not exclusively a silicon substrate. An optical layer 450, e.g. a layer of TFLN or other suitable EO material, is located upon the insulating layer 420. Ridges 430 and 440 in the EO material of the optical layer 450 form optical cores of the optical waveguides 30 and 40. In the illustrated example, the ridges 430, 440 are so called "shallow ridges", i.e. a thinner layer of the EO material is still present away from the ridges; in other implementations, the EO material away from the ridges 430 and 440 may be absent, e.g. removed in manufacturing, and suitable cladding material optionally deposited over the ridges 430, 440 to form optical cores of channel optical waveguides. Drive electrodes 110, 120, and the end segments 131, 141, 132 of the modulation electrodes 130, 140 are metallic electrodes located in a layer 460 over the optical layer 450. The transverse connection segments 133, 143 are located in a next, vertically offset layer 470, and have parts in electrical contact, and direct or indirect physical contact, with the corresponding drive electrodes 110, 120 and the end segments 131, 132, 141, e.g. as shown in FIGs. 4B and 4C. The layer 470 may include a suitable cladding material, e.g. SiO2, disposed over the optic core layer 450 in gaps between the metallic electrodes of the layer 450.

FIGs. 5 and 6 illustrate some example variations of the general layer structure of the chip 10 illustrated in FIGs. 4A-4C. In the example of FIG. 5, the drive electrodes 110, 120 are disposed in the vertically-offset layer 170 along with the transverse connection segments 133, 143 (not shown) of the modulation electrodes 130 and 140. In the example of FIG. 6, a thin cap layer 460 of a suitable cladding material, e.g. SiO2, is provided between the first electrode layer 460 and the optical, e.g. TFLN, layer 450, so that the end segments 131, 141, 132 of the modulation electrodes 130, 140 are somewhat vertically offset from the optical waveguides 30 and 40. It will be appreciate that other layer configurations of the chip 10 are also possible; e.g. the chip 10 may typically include other layers not shown in FIGs. 4A-6.

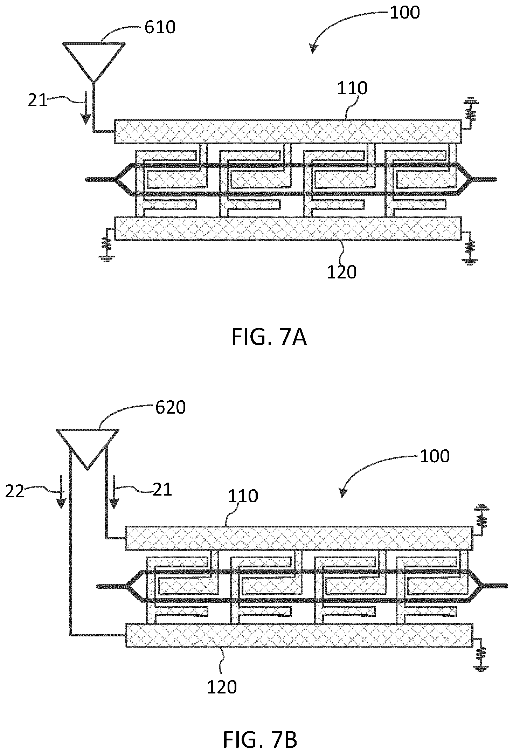

Referring to FIG. 7A and 7B, in some embodiments, the MZM 100 may be operated using a ground-signal ("*G*-*S*") modulation scheme, which is schematically illustrated in FIG. 7A. In this driving scheme, one of the drive electrodes, e.g. 120, is a "ground" electrode, and the other drive electrode, e.g. 110, is a TW signal electrode. An RF driver circuit 610 generates a single-ended RF driving signal 21 that is applied to the signal electrode 110. In other embodiments both drive electrodes 110 and 120 are TW signal electrodes, which in operation are driven by a differential pair of RF signals 21, 22 that are generated by a differential RF driver 620 (FIG. 7B, *S-S̅* driving scheme). The RF transmission line 160 formed by the drive electrodes 110 and 120 may be configured to suitably match the delay times of the RF modulation signal(s) 21 and/or 22 between consecutive modulator sections, e.g. 121, 210, or 310, of the MZM 100 to the propagation time of the light 101 in corresponding sections of the optical waveguides 30 and 40.

The example electrode configurations described herein may have several advantages compared to that of a conventional MZM driven by a three-electrode RF transmission line. Some of the potential advantages of the above described examples may include a higher characteristic impedance and a lower group delay dispersion of the two-electrode RF transmission line, leading to a lower power consumption and/or greater modulation bandwidth. Other potential advantages include the ability to adjust several design parameters of the electrodes, such as the length of the end-segments of the modulation electrodes that extend along the waveguide arms of the MZM, and the number of the modulator sections in the MZMI.

The electrode layout illustrated in FIGs. 1-3, 7A, and 7B may be modified in several respects, including but not limited to the lateral position of the RF drive electrodes 110, 120 relative to the optical waveguides 30 and 40, and the shape and/or location of the transverse connection segments 133, 143. E.g., in the examples of FIGs. 2 and 3, the transverse connection segments 133 may be located anywhere along the length of the corresponding end segments 131, 132. Other variations may include, e.g., relative orientation of adjacent pairs of the modulation sections 121 (FIG. 1), and the size of a gap therebetween, when present.

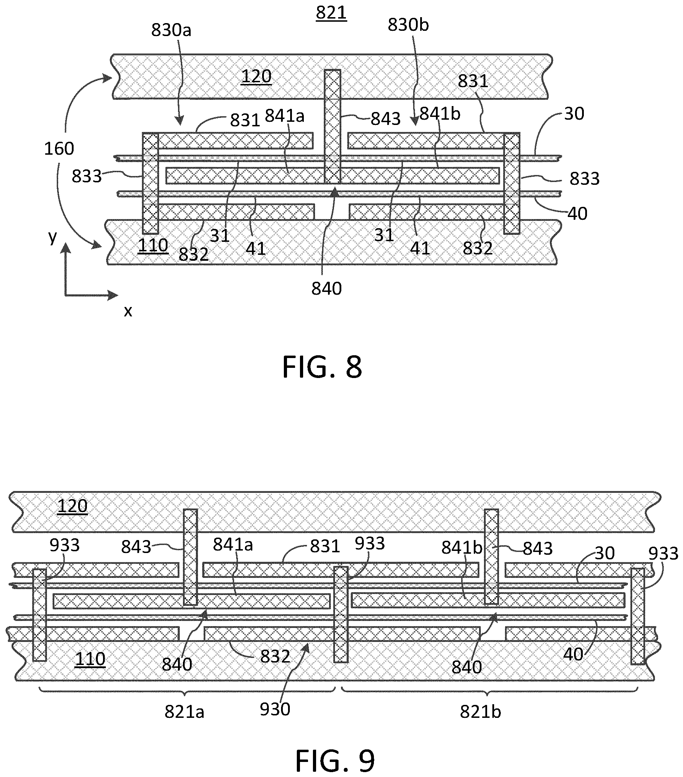

FIG. 8 illustrates an example modulator section 821 with a symmetrical layout of modulation electrodes; one or more of such modulator sections may be used in embodiments of the MZM 100. The modulator section 821 includes two first modulation electrodes, 830a and 830b, having pairs of end segments 831 and 832 projecting toward each other from the respective transverse connecting segments 833. The second modulation electrode 840 of the modulator section 210 has two end segments 841a and 841b that project from a shared transverse connection segment 843 in opposite directions, extending along and between a pair of optical waveguide segments 31 and 41. The modulation electrode layout of FIG. 8 may be obtained by modifying the electrode layout of FIG. 1, such that two adjacent modulation sections 121 have mirror-symmetrical orientation, with the end segments 141 of their respective second electrodes sharing the transverse connection segment 843 to form the second electrode 840. In this configuration, the length of the end segments 831 and 832 may be reduced compared to the end segments 131, 132 as described above for the example of FIGs. 1 and 2.

FIG. 8 further illustrates another possible modification of the electrode layout of FIG. 2, which is a lateral offset of the RF transmission line 160 relative to the pair of optical waveguide arms 30 and 40 of the MZM. The lateral gap between the drive electrode 110 and the closest end segment 831 is reduced, e.g. to zero in the illustrated example, so that the end segment 831 of the first modulation electrode 830 may be in physical contact with the drive electrode 110 along a length thereof.

FIG. 9 illustrates another example electrode layout which may be used in embodiments of the MZM of the present disclosure, such as the MZM 100 of FIG. 1. In this example, one or more pairs of adjacent modulator sections 821 of FIG. 8, indicated with reference numerals 821a and 821b, are joined at the transverse connection segments 833 (FIG. 8) of the first electrodes 840 thereof, so as to form transverse connection segments 933, from which two pairs of end segment 831 and 832 project in opposite directions along opposite edges of the two optical waveguides 30 and 40.

The examples of electro-optical waveguide modulators and electrode configurations thereof described above are not intended to be limiting, and many variations will become apparent to a skilled reader having the benefit of the present disclosure. For example, in some implementations the optical waveguides 30 and 40 may include semiconductor material, such as e.g. silicon or compound semiconductor; in some implementation, the optical waveguides may include a p/n junction. In another example, features described above with reference to different embodiments or implementations may be combined; e.g. two or more of the example electrode layouts described above with reference to FIGs. 1, 2, 3, 7, and 8 may be combined in a same MZM.

According to an example embodiment disclosed above, e.g., in the summary section and/or in reference to any one or any combination of some or all of FIGs. 1-7B, provided is an apparatus comprising a planar EO Mach-Zehnder modulator (MZM) (e.g. 100). The planar EO MZM is disposed along a surface (e.g. 107, FIGs. 1, 4A) of a substrate (e.g. 105, FIG. 1; 420, FIGs. 4A-4C) and comprises an RF transmission line (e.g. 160, FIGs. 1, 8) comprising two drive electrodes (e.g. 110 and 120, FIGs. 1 - 9) extending along the surface; two optical waveguides (e.g. 30 and 40, FIGs. 1-6, 8, 9) extending between the drive electrodes along thereof and being connected to receive light in parallel from an optical splitter (e.g. 112, FIG. 1); first modulation electrodes (e.g. 130, FIGs. 1-3; 830a and 830b, FIG. 8; 930, FIG. 9) electrically connecting to a first of the drive electrodes (e.g. 110, FIGs. 1-6, 8, 9) such that an adjacent pair of segments (e.g. 31 and 41, FIGs. 2, 3, 8, 9) of the optical waveguides is located between a pair of end segments (e.g. 131 and 132, FIGs. 1-3; 831, 832, FIGs. 8, 9) of a corresponding one (e.g. 130, FIGs. 1, 2) or two (e.g. 130a and 130b, FIG. 3) of the first modulation electrodes; and second modulation electrodes (e.g. 140, FIGs. 1-3; 840, FIGs. 8, 9) electrically connecting to the second (e.g. 120) of the drive electrodes such that an end segment (e.g. 141, FIGs. 1-3; 841a, 841b, FIGs. 8, 9) of each of the second modulation electrodes is located between a corresponding one of the adjacent pairs of segments (e.g. 31 and 41, FIGs. 2, 3, 8, 9) of the two optical waveguides.

The optical waveguides (e.g. 30 and 40, FIGs. 1-6, 8, 9) may comprise electro-optic material (e.g. 450, FIGs. 4A-6). In some implementations, the electro-optic material may be lithium niobate or barium titanate. In some implementations, the electro-optic material may be an electro-optic polymer. In some implementations the optical waveguide may include other EO materials which are suitable for use in a photonic integrated circuit.

In some implementations, the optical waveguides (e.g. 30 and 40, FIGs. 1-6, 8, 9) may comprise semiconductor material, such as e.g. silicon or compound semiconductor. In some of such implementations, the optical waveguide may comprise a p/n junction.

In any of the above implementations, the MZM may comprise at least four (4) of the second modulation electrodes, each comprising a transverse segment (e.g. 133, FIGs. 1-3, 4B, 4C; 843, FIGs. 8, 9) extending from the second drive electrode. In any of such implementations, the MZM may comprise at least four of the pairs of end segments (e.g. 131 and 132, FIGs. 1,2; 831 and 832, FIGs. 8, 9) of the first optical waveguides and at least four other transverse segments (e.g. 133, FIGs. 1,2; 833, FIG. 8; 933, FIG. 9) extending from the first drive electrode to separately connect the at least four of the pairs of end segments thereto. In any such implementation, the transverse segments may be located in a different layer than the optical waveguides.

In any of the above implementations, the two drive electrodes (e.g. 110 and 120, FIG. 5) may be vertically offset from at least some of the end segments (e.g. 131 and/or 132, FIG. 5) of the first and second modulation electrodes.

In any of the above implementations, the two optical waveguides (e.g. 30 and 40, FIG. 6) may be vertically offset from at least some of the end segments (e.g. 131 and/or 132, FIG. 6) of the first and second modulation electrodes.

In any of the above implementations, the end segments of at least one of the first and second electrodes may be 50 to 400 microns long. In some implementations, the end segments of at least one of first and second electrodes may be 100 to 200 microns long.

In any of the above implementations, the MZM may comprise the optical splitter and an optical combiner (e.g. 114, FIG. 1), the optical combiner being connected to output ends of the two optical waveguides to receive the light therefrom.

Any of the above implementations may further comprise a driver circuit (e.g. 610, FIG. 6; 620, FIG. 7) for electrically driving the RF transmission line. In some of such implementations, the driver circuit (e.g. 620, FIG. 7) may have differential outputs electrically connected to corresponding ones of the first (e.g. 110) and second (e.g. 120) drive electrodes.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims. Various features described above with reference to a specific embodiment or embodiments may be combined with other embodiments.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Furthermore in the description above, for purposes of explanation and not limitation, specific details are set forth such as particular architectures, interfaces, techniques, etc. in order to provide a thorough understanding of the present invention. In some instances, detailed descriptions of well-known devices, circuits, and methods are omitted so as not to obscure the description of the present invention with unnecessary detail. Thus, for example, it will be appreciated by those skilled in the art that block diagrams herein can represent conceptual views of illustrative circuitry embodying the principles of the technology. All statements herein reciting principles, aspects, and embodiments of the invention, as well as specific examples thereof, are intended to encompass both structural and functional equivalents thereof.

Thus, while the present invention has been particularly shown and described with reference to example embodiments as illustrated in the drawing, it will be understood by one skilled in the art that various changes in detail may be affected therein without departing from the spirit and scope of the invention as defined by the claims.

## Claims

1. An apparatus comprising:
a planar electro-optic (EO) Mach-Zehnder modulator (MZM) (100) disposed along a surface (107) of a substrate (105; 420) and comprising:
an RF transmission line (160) comprising two drive electrodes (110, 120) located along the surface;
two optical waveguides (30, 40) extending between the drive electrodes along thereof and being connected to receive light in parallel from the optical splitter (112);
first modulation electrodes (130; 830a, 830b; 930) electrically connecting to a first of the drive electrodes (110) such that an adjacent pair of segments (31, 41) of the optical waveguides is located between a pair of end segments (131, 132; 831, 832) of a corresponding one (130) or two (130a, 130b) of the first modulation electrodes; and
second modulation electrodes (140; 840) electrically connecting to the second of the drive electrodes (120) such that an end segment (141; 841a, 841b) of each of the second modulation electrodes is located between a corresponding one of the adjacent pairs of segments (31, 41) of the two optical waveguides.

2. The apparatus of claim 1 comprising at least four second modulation electrodes, each comprising a transverse segment (133; 843) extending from the second drive electrode.

3. The apparatus of claim 2 comprising at least four of the pairs of end segments of the first modulation electrodes, and at least four other transverse segments extending from the first drive electrode to separately connect the at least four of the pairs of end segments thereto.

4. The apparatus of claims 2 or 3 wherein the transverse segments are located in a different layer than the optical waveguides transverse thereto.

5. The apparatus of any one of claims 1 to 4 wherein the two drive electrodes are vertically offset from the end segments of the first and second modulation electrodes.

6. The apparatus of any one of claims 1 to 5 wherein the two optical waveguides are vertically offset from at least some of the end segments of the first and second modulation electrodes.

7. The apparatus of any one of claims 1 to 6 wherein the optical waveguides comprise electro-optic material.

8. The apparatus of claim 7, wherein the electro-optic material is one of lithium niobate or barium titanate.

9. The apparatus of claim 7, wherein the electro-optic material is a semiconductor or an electro-optic polymer.

10. The apparatus of any one of claims 1 to 9 wherein the end segments of at least some of the first and second modulation electrodes are 50 to 400 microns long.

11. The apparatus of any one of claims 1 to 10 wherein the end segments of at least some of the first and second modulation electrodes are 100 to 200 microns long.

12. The apparatus of any of claims 1 to 11 comprising at least 10 of the second modulation electrodes.

13. The apparatus of any one of claims 1 to 12 further comprising the optical splitter and an optical combiner (114), the optical combiner being connected to output ends of the two optical waveguides.

14. The apparatus of any one of claims 1 to 13 further comprising a driver circuit (610; 620) for electrically driving the RF transmission line.

15. The apparatus of claim 14 wherein the driver circuit (620) has differential outputs electrically connected to corresponding ones of the first and second drive electrodes.
